(19) Europäisches Patentamt

European Patent Office

Office européen des brevets

(11) Veröffentlichungsnummer: **0 210 407 B1**

# (12) EUROPÄISCHE PATENTSCHRIFT

(45) Veröffentlichungstag der Patentschrift: **12.08.92**

(21) Anmeldenummer: **86108278.2**

(22) Anmeldetag: **18.06.86**

(51) Int. Cl.⁵: **B62D 11/18**, B62D 11/04, B60K 17/10

(54) Antrieb für Fahrzeuge.

(30) Priorität: **26.06.85 CH 2741/85**

(43) Veröffentlichungstag der Anmeldung:
**04.02.87 Patentblatt 87/06**

(45) Bekanntmachung des Hinweises auf die
Patenterteilung:
**12.08.92 Patentblatt 92/33**

(84) Benannte Vertragsstaaten:
**AT DE FR IT SE**

(56) Entgegenhaltungen:
**FR-A- 2 430 483      GB-A- 2 058 300**
**US-A- 3 398 605      US-A- 3 538 790**
**US-A- 3 797 599      US-A- 4 116 292**
**US-A- 4 129 192      US-A- 4 132 278**
**US-A- 4 580 646**

(73) Patentinhaber: **Leo Stahl AG**
**Hauptstrasse 78**
**CH-9572 Busswil(CH)**

(72) Erfinder: **Stahl, Leo**
**Hauptstrasse 79**
**CH-9572 Hub-Busswil(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Antrieb für ein Fahrzeug nach der im Oberbegriff des Patentanspruches 1 umschriebenen und durch die US-A-4 129 192 bekannten Bauart.

Fahrzeugantriebe der vorstehend erwähnten Art werden vor allem bei Spezialfahrzeugen eingesetzt, z.B. bei Schneeräummaschinen, Pistenunterhaltfahrzeugen, militärischen und im Bausektor eingesetzten Fahrzeugen u.dgl. Die Kraftübertragung vom Antriebsaggregat auf das Fahrwerk erfolgt in vielen Fällen mittels einer hydraulischen Getriebeanordnung. Hierbei wird jeder Fahrwerkseite mindestens ein Hydrogetriebe zugeordnet. Damit ist es möglich, bei gleichsinniger Aenderung der Getriebeübersetzung die Geschwindigkeit des Fahrzeuges zu erhöhen oder zu erniedrigen. Zum Lenken dagegen werden die Getriebeübersetzungen der Hydrogetriebe in entgegengesetzter Weise geändert, wodurch ungleiche Geschwindigkeiten auf den beiden Fahrzeugseiten entstehen, so dass dadurch eine Lenkbewegung eingeleitet wird. Bei Raupenfahrzeugen ist diese Art der Lenkung allgemein üblich; sie wird aber auch bei Räderfahrzeugen angewendet, die keine spezielle Lenkwelle mit Lenkrädern aufweisen.

In seiner einfachsten Ausführungsform weist eine solche hydraulische Getriebeanordnung zwei Hydrogetriebe auf, je eines für jede Fahrzeugseite, die sich aus einer Hydropumpe, einem Hydromotor und den Hilfsaggregaten, wie z.B. Speisepumpe, Oelbehälter, Oelfilter u.dgl. zusammensetzen.

Für den Antrieb der beiden Hydropumpen und der Speisepumpen ist z.B. aus US-A-4 132 278 bekannt, am Antriebsaggregat, meistens einem thermischen Motor, ein Zahnradgetriebe anzubauen, das als Verteilgetriebe ausgebildet ist und zwei oder drei Ausgangswellen aufweist. Bei dieser Lösung treten jedoch in dem als Zahnradgetriebe ausgebildeten Verteilgetriebe Leistungsverluste auf, die pro Zahnradpaarung mehrere Prozente betragen können.

Da das Verteilgetriebe mit dem Antriebsaggregat fest verbunden ist und das Antriebsaggregat selbst federnd oder elastisch gelagert ist, treten zwischen der Hydropumpe und dem Hydromotor Längenänderungen auf, die die Verwendung fester Leitungen, z.B. Stahlrohrleitungen, verunmöglichen. Zwar sind heute Hochdruckschläuche bekannt, die die bei solchen Hydrogetrieben auftretenden Drücke aushalten, jedoch ist die Betriebssicherheit solcher Schlauchleitungen kleiner als von festen metallischen Rohrleitungen.

Aus US-A-4 129 152 sind bei einem Hydrogetriebe feste metallische Rohrleitungen zwischen der Hydropumpe und dem Hydromotor vorgesehen. Dies setzt jedoch voraus, dass das Hydrogetriebe als sogenanntes Kompaktgetriebe ausgebildet ist, bei welchem ein einziges Gehäuse für die Anordnung bzw. für die Unterbringung der Hydroeinheiten vorgesehen ist. Bei Ferngetrieben ist jedoch eine solche Lösung nicht anwendbar. Weiter ist aus GB-A-2 058 300 eine hydraulische Getriebeanordnung mit zwei Hydrogetrieben für je eine Antriebsseite eines Fahrzeuges bekannt, bei welcher aus dem schematisch dargestellten Schaltschema die beiden Hydropumpen mit der Antriebswelle der Kraftmaschine verbunden sind. Es ist jedoch aus dem Schaltschema nicht erkennbar, in welcher Weise die Verbindung zwischen den Hydropumpen und der Kraftmaschine konkret erfolgt. Auch die Verbindung einer kleineren Speisepumpe für die Speisung der beiden Hydrogetriebe ist nicht näher beschrieben.

Der Erfindung liegt die Aufgabe zugrunde, einen Antrieb für Fahrzeuge der eingangs beschriebenen Art so auszugestalten, dass die bei den bekannten hydraulischen Getriebeanordnungen auftretenden Leistungsverluste vermindert und die Betriebssicherheit solcher Getriebeanordnungen erhöht wird.

Diese Aufgabe wird gemäss der Erfindung durch die kennzeichnenden Merkmale des Patentanspruchs 1 gelöst.

Die Erfindung ist in der Zeichnung in einem Ausführungsbeispiel dargestellt und nachfolgend beschrieben. Es zeigen:

Fig. 1 eine schematisch dargestellte Seitenansicht eines Raupenfahrzeuges, z.B. eines Pistenunterhaltungsfahrzeuges,

Fig. 2 eine schematisch dargestelle Seitenansicht einer Hydropumpengruppe einer hydraulischen Getriebeanordnung für das Fahrzeug nach Fig. 1 und

Fig. 3 eine schematisch dargestellte Draufsicht der Hydropumpengruppen nach Fig. 2.

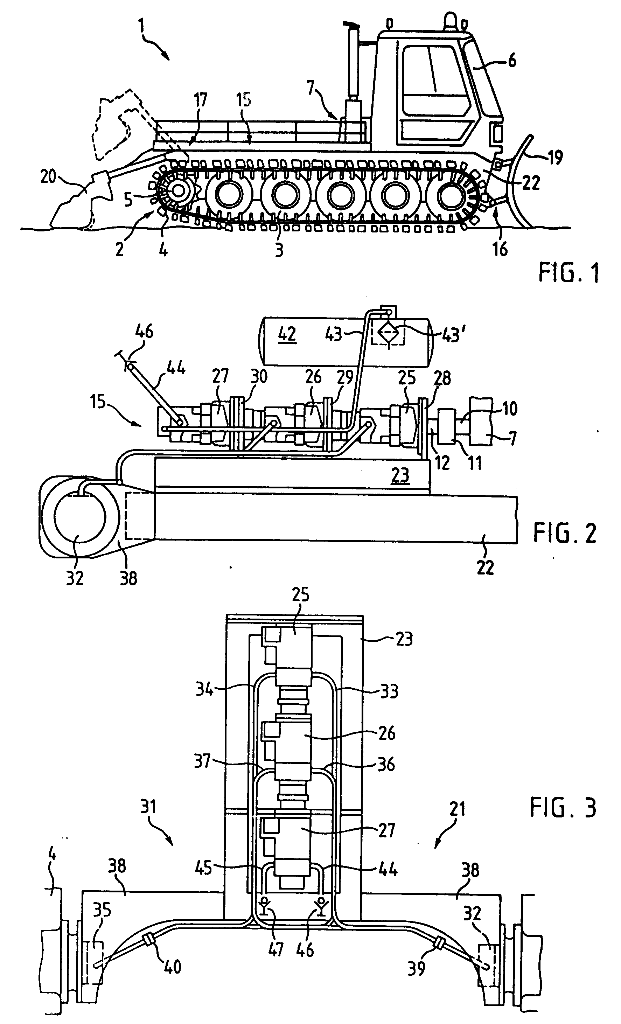

Das in Fig. 1 dargestellte Fahrzeug 1 weist ein als Raupenfahrwerk ausgebildetes Fahrwerk 2 auf, das für jede Fahrwerkseite eine auf Rollen 3 geführte Raupe 4 aufweist. Der Antrieb der Raupe 4 erfolgt durch ein Antriebsrad 5.

Das Fahrzeug 1 weist eine Fahrkabine 6 auf, in der das Antriebsaggregat (nicht dargestellt) teilweise untergebracht ist. Der hintere Teil 7 des Antriebsaggregates ragt aus der Rückseite der Fahrkabine 6 und weist eine Abtriebswelle 10 auf (siehe Fig. 2), die über eine vorzugsweise elastische Kupplung 11 mit einer Antriebswelle 12 einer Hydropumpengruppe 15 verbunden ist (in Fig. 1 nicht sichtbar). Die Hydropumpengruppe 15 ist im Detail in den Figuren 2 und 3 dargestellt.

Das Fahrzeug 1 weist auf der Vorderseits und auf der Rückseite Befestigungs- und Hebeeinrichtungen 16, 17 auf, an denen Geräte verschiedener Art angeordnet werden können. In Fig. 1 ist an der Befestigungs- und Hebeeinrichtung 16 z.B. eine Pflugschar 19 befestigt, während an der Befestigungs- und Hebevorrichtung 17 z.B. eine Pistenfräse 20 angekuppelt ist. Das Fahrzeug 1 weist im übrigen alle zusätzlichen Einrichtungen auf, die für das Fahren und Lenken des Fahrzeuges erforderlich sind, die jedoch im Zusammenhang mit der Erfindung nicht wesentlich sind. Die Fahrerkabine 6, das Antriebsaggregat, die Hydropumpengruppe 15 und das Fahrwerk 2 sind an einem Chassis 22 angeordnet, dessen Konstruktion nicht näher beschrieben wird, da sie ebenfalls für die Erfindung unwesentlich ist.

Die Hydropumpengruppe 15 ist auf einem gemeinsamen Rahmen 23 abgestützt, der seinerseits auf dem Chassis 22, vorzugsweise mit Befestigungsschrauben, lösbar befestigt ist.

Auf dem Rahmen 23 sind drei Hydropumpen 25, 26, 27 an je einem Support 28, 29 30 befestigt, der auf dem Rahmen 23 abgestützt ist. Wie aus Fig. 2 und 3 ersichtlich ist, sind die Hydropumpen 25, 26, 27 in Serie hintereinander angeordnet und miteinander über ihre Pumpenwellen gekuppelt. Hierbei stellt die Hydropumpe 25 den Primärteil eines Hydrogetriebes 21 dar, mit dem beispielsweise die rechte Fahrwerkseite angetrieben wird. Die Hydropumpe 26 ist dann der Primärteil eines zweiten Hydrogetriebes 31, das dem Antrieb der linken Fahrwerkseite dient. Das Hydrogetriebe für die rechte Fahrwerkseite setzt sich demnach im wesentlichen aus der Hydropumpe 25 und einem Hydromotor 32 als Sekundärteil zusammen, wobei die beiden Teile 25, 32 durch Druckleitungen 33, 34 miteinander verbunden sind.

In analoger Weise setzt sich das Hydrogetriebe 31 für den Antrieb des linken Fahrwerkteiles aus der Hydropumpe 26 und einem Hydromotor 35 zusammen, wobei die Teile 26, 35 durch Druckleitungen 36, 37 miteinander verbunden sind.

In Fig. 2 und 3 sind die Hydropumpen 25, 26, 27 und die Hydromotoren 32, 35 Axialkolben-Einheiten. Es ist aber auch möglich, anstelle von Axialkolben-Einheiten auch andere Einheiten, z.B. Radialkolben-Einheiten, zu verwenden.

Die Hydropumpe 27, die gegenüber dem Antriebsaggregat am weitesten entfernt ist, dient zum Betrieb von abkuppelbaren Zusatzgeräten, z.B. einer Fräse oder einer Seilwinde. Während die Hydropumpe 25 mit der Hydropumpe 26 mit einer Kupplung (nicht dargestellt) verbunden ist, die im Betrieb nicht abkuppelbar ist, ist zwischen der Hydropumpe 26 und der Hydropumpe 27 eine ein- und ausrückbare Schaltkupplung (nicht dargestellt) vorgesehen. Diese Schaltkupplung kann beispielsweise eine Elektromagnet-Zahnkupplung sein, wie sie beispielsweise von der Ortlinghaus AG, Zug, angeboten wird. Es könnten aber auch hydraulisch oder pneumatisch schaltbare Kupplungen derselben oder einer anderen Firma verwendet werden. Die Kupplung zwischen den Hydropumpen 25, 26, kann beispielsweise eine nichtschaltbare Zahnkupplung sein.

Wie vor allem aus Fig. 3 ersichtlich ist, weist der Rahmen 23 zwei nach auswärts ragende Träger 38 auf, die zudem, siehe Fig. 2, nach abwärts ragen und die Hydromotoren 32 bzw. 35 tragen. An der Abtriebswelle der Hydromotoren 32, 35 ist, vorzugsweise über Reduktionsgetriebe, das Antriebsrad 5 einer Fahrwerkseite befestigt. Dadurch, dass die Hydromotoren 32, 35 an den Trägern 38 befestigt sind, die einen Teil des Rahmens 23 bilden, können die Druckleitungen 33, 34 und 36, 37 als feste metallische Rohrleitungen, z.B. als Stahlrohrleitungen, ausgebildet sein, da wegen des gemeinsamen Rahmens 23 für die Hydropumpen und -motoren keine Distanzänderungen zwischen Primär- und Sekundärteil der beiden Hydrogetriebe 21, 31 auftreten. Aber auch dann, wenn die Hydromotoren 32, 35 im Chassis 22 gelagert sind, können feste metallische Leitungen als Druckleitungen vorgesehen werden, da der Rahmen 23 nicht beweglich, sondern fest mit dem Chassis 22 verbunden ist. Werden in den Druckleitungen 33, 34 der beiden Hydrogetriebe Rohrverschraubungen 39, 40 vorgesehen, kann die Hydropumpengruppe 15 für sich allein demontiert und vom Fahrzeug entfernt werden. Dadurch lassen sich Ueberholarbeiten oder Reparaturen an den Hydropumpen gut durchführen.

Aber auch dann, wenn nach Fig. 3 die Hydropumpen 32, 35 im gemeinsamen Rahmen 23 gelagert sind, kann die gesamte hydraulische Getriebeanordnung mit geringem Demontageaufwand vom Chassis 22 gelöst und vom Fahrzeug entfernt werden.

Die Hydropumpengruppen 15 weist selbstverständlich auch die für den Betrieb notwendigen Hilfsaggregate auf. Aus Fig. 2 ist ersichtlich, dass über der Hydropumpengruppe 15 ein Oelbehälter 42 angeordnet ist. In den Oelbehälter 42 wird über eine Leitung 43 das anfallende Lecköl und das aus den jeweiligen unter Niederdruck stehenden Druckleitungen abgezweigte Kühlöl zurückgeführt, wo es noch in einem Filter 43' gereinigt wird. Die für die Hydropumpengruppe 15 erforderliche Speisepumpe bzw. Speisepumpen können direkt mit den Hydropumpen gekuppelt sein oder es kann eine separate Speisepumpengruppe dafür vorgesehen werden. Die Hydropumpe 27, die für die Betätigung der Zusatzgeräte dient, weist in ihren beiden Druckleitungen 44, 45 schematisch dargestellte Rohrkupplungen 46, 47, z.B. Schnellschluss- Kupplungen, auf, die beim Trennen dar Druckleitungen 44, 45 als Abschlussventil wirken.

Bei der Anordnung der Hydropumpen gemäss Fig. 2 und 3 in Serieschaltung könnte der Eindruck aufkommen, dass die unmittelbar hinter dem Antriebsaggregat angeordnete Hydropumpe 25 überbelastet sei. Hierzu ist zu erwähnen, dass bei Kurvenfahrt, wenn die eine Fahrwerkseite stillsteht, praktisch die gesamte Leistung über eines der Hydrogetriebe 21, 31 übertragen wird, so dass die Welle der Hydropumpe 25 für diese Leistung ausgelegt sein muss. Bei der Geradeausfahrt wird die Hydropumpe 25 ebenfalls nicht mit einer grösseren Leistung beansprucht, da auch in diesem Fall nur die gesamte Motorleistung der Hydropumpengruppe 15 zugeführt wird, wobei aber im Gegensatz zur Kurvenfahrt jede Hydropumpe 25, 26 nur die halbe Leistung zu übertragen hat. Wird die Hydropumpe 27 eingesetzt, sind die Hydrogetriebe nicht oder nur wenig belastet, so dass auch in diesem Fall eine Ueberbelastung der Hydropumpen 25, 26 nicht auftreten kann.

Die vorstehend beschriebene hydraulische Getriebeanordnung weist gegenüber bekannten Getriebeanordnungen den Vorteil auf, dass wegen der Serieschaltung der Hydropumpen 25, 26, 27 ein Verteilgetriebe überflüssig ist und somit die Verlustleistung dieses Getriebes wegfällt. Zudem kann die Hydropumpe 25 direkt, vorzugsweise elastisch mit der Abtriebswelle 10 des gewöhnlich elastisch gelagerten Antriebsaggregates verbunden werden, so dass der Rahmen 23 fest auf dem Chassis 22 befestigt werden kann. Daraus resultiert der Vorteil, dass zwischen den Hydropumpen und den Hydromotoren feste Distanzen bestehen, so dass Stahlrohrleitungen verwendet werden können, deren Betriebsicherheit diejenige der sonst üblichen Hydraulik- schläuche wesentlich übertrifft. Dadurch können Pannen im Betrieb des Fahrzeuges weitgehend vermieden werden, so dass keine Verschmutzung des Bodens auftritt und zudem die Kosten für Verluste an Hydrauliköl gesenkt werden.

Im weiteren werden durch die beschriebene hydraulische Getriebeanordnung die Wartungskosten gesenkt, da entweder die Hydropumpengruppe 15 oder die gesamte hydraulische Getriebeanordnung leicht vom Fahrzeug gelöst und entfernt werden kann, wobei als Voraussetzung für eine gute Wartung eine gute Zugänglichkeit zu den Teilen der hydraulischen Getriebeanordnung erreicht wird.

## Patentansprüche

1. Antrieb für ein Fahrzeug, insbesondere für ein mit einem angetriebenen Raupenfahrwerk (2) versehenes Pistenfahrzeug (1), bestehend aus mindestens zwei Hydropumpen sowie zwei entsprechend zugeordneten Hydromotoren, wobei die beiden Hydropumpen einerseits über eine Welle (10) mit dem Antriebsaggregat (7) und andererseits je über ein Leitungssystem mit den entsprechend einem Antriebsrad (5) des Raupenfahrwerks zugeordneten Hydromotoren wirkverbunden sind, dadurch gekennzeichnet, dass dem Antriebsaggregat (7) eine aus mindestens drei in Reihe hintereinander angeordneten und über entsprechende Pumpen-Wellenenden miteinander gekuppelte Hydropumpen (25,26,27) gebildete Hydropumpengruppe (15) zugeordnet ist, bei welcher Hydropumpengruppe (15)
   a) die erste Hydropumpe (25) mittels einem ersten Wellenende mit dem Antriebsaggregat (7) und mittels einem zweiten Wellenende mit dem zugeordneten ersten Wellenende der zweiten Hydropumpe (26), und
   b) die zweite Hydropumpe (26) mittels einem ersten Wellenende mit der dritten Hydropumpe (27) gekuppelt ist.

2. Antrieb nach Anspruch 1, dadurch gekennzeichnet, dass die Welle (10) des Antriebsaggregates (7) mittels einer entsprechend elastisch wirkenden Kupplung (11) mit dem ersten Wellenende (12) der ersten Hydropumpe (25) verbunden ist.

3. Antrieb nach Anspruch 1, dadurch gekennzeichnet, dass die dritte Hydropumpe (27) mit der zweiten Hydropumpe (26) über eine zwischen den beiden entsprechend gegeneinander gerichteten Wellenenden angeordnete und ein- und ausrückbar ausgebildete Schaltkupplung wirkverbunden ist.

4. Antrieb nach Anspruch 1, dadurch gekennzeichnet, dass die erste und zweite Hydropumpe (25,26) mit den beiden auf die zugeordneten Antriebsräder (5) wirkenden Hydromotoren (32,35) und die in bezug zum Antriebsaggregat (7) am weitesten entfernte dritte Hydropumpe (27) mit entsprechend zugeordneten Hilfsaggregaten, wie beispielsweise Pistenfräsen, Seilwinden oder dergleichen wirkverbunden ist.

5. Antrieb nach Anspruch 1, dadurch gekennzeichnet, dass die aus den einzelnen Hydropumpen (25,26,27) gebildete Hydropumpengruppe (15) mittels entsprechend zugeordneter Supporte (28,29,30) auf einem gemeinsamen Rahmen (23) abgestützt und die einzelnen Elemente als eine am Fahrzeug-Chassis (22) montierbare und demontierbare Baueinheit ausgebildet ist.

## Claims

1. Drive for a vehicle, especially for a runway vehicle (1) equipped with a driven tracklaying truck (2), consisting of at least two hydraulic pumps and of two correspondingly assigned hydraulic motors, the two hydraulic pumps being operatively connected on the one hand, via a shaft (10), to the drive unit (7) and on the other hand, via respective line systems, to the hydraulic motors assigned correspondingly to a driving wheel (5) of the tracklaying truck, characterised in that the drive unit (7) is assigned a hydraulic-pump group (15) formed from at least three hydraulic pumps (25, 26, 27) arranged in series behind one another and coupled to one another via corresponding pump shaft ends, in which hydraulic-pump group (15)

a) the first hydraulic pump (25) is coupled by means of a first shaft end to the drive unit (7) and by means of a second shaft end to the associated first shaft end of the second hydraulic pump (26), and

b) the second hydraulic pump (26) is coupled by means of a first shaft end to the third hydraulic pump (27).

2. Drive according to Claim 1, characterised in that the shaft (10) of the drive unit (7) is connected to the first shaft end (12) of the first hydraulic pump (25) by means of an appropriately elastically acting coupling (11).

3. Drive according to Claim 1, characterised in that the third hydraulic pump (27) is operatively connected to the second hydraulic pump (26) via a shift coupling which is arranged between the two shaft ends appropriately directed towards one another and which is made engageable and disengageable.

4. Drive according to Claim 1, characterised in that the first and the second hydraulic pump (25, 26) are operatively connected to the two hydraulic motors (32, 35) acting on the associated driving wheels (5), and the third hydraulic pump (27) furthest away from the drive unit (7) is operatively connected to correspondingly assigned auxiliary units, such as, for example, runway cutters, rope winches or the like.

5. Drive according to Claim 1, characterised in that the hydraulic-pump group (15) formed from the individual hydraulic pumps (25, 26, 27) is supported on a common frame (23) by means of correspondingly assigned supports (28, 29, 30), and the individual elements are designed as a constructional unit mountable and dismountable on the vehicle chassis (22).

**Revendications**

1. Motorisation pour un véhicule, en particulier pour un véhicule de piste (1) équipé de chenilles à moteur (2), se composant d'au moins deux pompes hydrauliques ainsi que de deux moteurs hydrauliques respectifs associés, dans laquelle les deux pompes hydrauliques sont activement couplées d'une part par un arbre (10) au groupe générateur de pression (7) et d'autre part, chacune par un circuit de canalisations, aux moteurs hydrauliques respectifs associés à une roue motrice (5) de la chenille, caractérisée en ce qu'au groupe générateur de pression (7) est associé un groupe (15) de pompes hydrauliques formé d'au moins trois pompes hydrauliques (25, 26, 27) disposées en série l'une derrière l'autre et couplées l'une à l'autre par des bouts d'arbres de pompe correspondants, groupe (15) de pompes hydrauliques dans lequel

a) la première pompe hydraulique (25) est couplée par un premier bout d'arbre au groupe générateur de pression (7) et par un second bout d'arbre au premier bout d'arbre associé de la deuxième pompe hydraulique (26), et

b) la deuxième pompe hydraulique (26) est couplée à la troisième pompe hydraulique (27) au moyen d'un premier bout d'arbre.

2. Motorisation suivant la revendication 1, caractérisée en ce que l'arbre (10) du groupe générateur de pression (7) est relié au moyen d'un accouplement à action élastique (11) appropriée au premier bout d'arbre (12) de la première pompe hydraulique (25).

3. Motorisation suivant la revendication 1, caractérisée en ce que la troisième pompe hydraulique (27) est activement reliée à la deuxième pompe hydraulique (26) par l'intermédiaire d'un embrayage disposé entre les deux bouts d'arbre respectifs dirigés l'un vers l'autre et agencé de manière embrayable et débrayable.

4. Motorisation suivant la revendication 1, caractérisée en ce que la première et la deuxième pompes hydrauliques (25, 26) sont activement raccordées aux deux moteurs hydrauliques (32, 35) agissant sur les roues motrices (5) respectives et en ce que la troisième pompe hydraulique (27), la plus éloignée par rapport au groupe générateur de pression (7), est activement raccordée à des unités auxiliaires respectives associées, comme par exemple des fraises de piste, des treuils à câble ou analogues.

5. Motorisation suivant la revendication 1, caractérisée en ce que le groupe (15) de pompes hydrauliques composé des pompes hydrauliques individuelles (25, 26, 27) est monté sur un bâti commun (23) au moyen de supports (28, 29, 30) respectifs associés et en ce que les divers éléments constituent des unités de construction distinctes à monter au et à démonter du châssis (22) du véhicule.

FIG. 1

FIG. 2

FIG. 3